(19) Europäisches Patentamt
European Patent Office
Office européen des brevets

(11) **EP 2 551 720 B1**

(12) **FASCICULE DE BREVET EUROPEEN**

(45) Date de publication et mention
de la délivrance du brevet:
**26.11.2014 Bulletin 2014/48**

(51) Int Cl.:
*G03B 42/02* (2006.01)     *G01N 23/04* (2006.01)
*H04N 5/32* (2006.01)     *G01B 15/00* (2006.01)

(21) Numéro de dépôt: **12177430.1**

(22) Date de dépôt: **23.07.2012**

(54) **Système d'imagerie pour l'imagerie d'objets a mouvement rapide**

Bildgebungssystem für die Bildgebung von sich schnell bewegenden Objekten

Imaging system for imaging of fast-moving objects

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.07.2011 FR 1156773**

(43) Date de publication de la demande:
**30.01.2013 Bulletin 2013/05**

(73) Titulaire: **Commissariat à l'Énergie Atomique
et aux Énergies Alternatives
75015 Paris (FR)**

(72) Inventeurs:
• **Bleuet, Pierre
38180 Seyssins (FR)**
• **Jalabert, Denis
38100 Grenoble (FR)**

(74) Mandataire: **Ilgart, Jean-Christophe et al
BREVALEX
95, rue d'Amsterdam
75378 Paris Cedex 8 (FR)**

(56) Documents cités:
GB-A- 2 377 275     JP-A- 1 159 615
JP-A- 5 153 495     JP-A- 63 026 083
JP-A- 2010 181 190     US-A- 3 603 828
US-A- 4 220 975     US-A- 4 636 629
US-A- 4 671 102     US-A- 4 996 413
US-A- 5 887 049     US-A1- 2001 046 276
US-A1- 2008 075 227     US-A1- 2009 272 908
US-A1- 2010 052 118

• BEETZ, BOERSTLER, STEINBECK, LEMIEUX, WINN: "Silicon-micromachined microchannel plates", NUCLEAR INSTRUMENTS AND METHODS IN PHYSICS RESEARCH, vol. 442, 11 mars 2000 (2000-03-11), pages 443-451, XP002664102,

**Description**

**DOMAINE TECHNIQUE ET ART ANTÉRIEUR**

La présente invention se rapporte à un système d'imagerie pour l'imagerie d'objets ayant un mouvement rapide, en particulier les systèmes microélectromécaniques MEMS (Microelectromechanical Systems) et les systèmes nanoélectromécaniques NEMS (Nanoelectremechanical Systems).

Parmi les MEMS et NEMS, on trouve des oscillateurs dont le mouvement est périodique, il s'agit par exemple des commutateurs RF ou de certains gyroscopes. Ces MEMS et NEMS sont des objets dit «enterrés», c'est-à-dire qu'ils sont enfermés dans du silicium. L'observation au moyen de la microscopie électronique, l'optique, la caractérisation électrique ou la vibrométrie laser ne fonctionne pas : la protection en silicium est opaque aux électrons et aux photons lumineux et la caractérisation électrique ne fournit pas d'images.

A des fins de simplicité, les MEMS ou les NEMS seront tous désignés par la suite "microsystèmes".

Or, on cherche à étudier leur comportement lorsque leurs parties mobiles oscillent, pour comprendre leur fonctionnement et les raisons pour lesquelles ils peuvent présenter un dysfonctionnement.

Par exemple, il a été observé, en déterrant des microsystèmes ne fonctionnant plus, un transfert de matière entre la partie fixe et la partie mobile.

Cependant le déroulement de ce transfert de matière n'a pu être observé. Dans le cas de commutateurs RF, on a observé la présence de nanofils provoquant un court-circuit, mais le phénomène d'apparition de ces nanofils reste également inobservé.

Par conséquent, l'observation en mouvement des microsystèmes serait utile pour pouvoir optimiser leurs structures.

Afin d'observer des objets enterrés, l'imagerie par rayons X peut être utilisée. Par exemple, il existe des systèmes d'imagerie par rayons X comportant une source rayons X, un obturateur en amont de l'objet à observer et des moyens de détection des rayons transmis par l'objet. L'obturateur est un obturateur mécanique en plomb afin d'arrêter totalement les rayons X en dehors de la période d'exposition, cependant. L'obturateur est déplacé pour interrompre ou permettre l'illumination de l'objet. Du fait de l'inertie de l'obturateur et pour des raisons mécaniques et de stabilité, de tels obturateurs ne sont pas utilisables pour les fréquences de fonctionnement des microsystèmes qui sont comprises entre environ 1 kHz et environ 1 GHz.

Le document US 2001/046276 décrit un microscope à rayons X pour observer des structures sur un substrat semi-conducteur, le microscope comportant une source de rayons X, un convertisseur de rayons X en radiation visible, un détecteur de type PN-CCD et un support pour la structure à observer.

Le document GB 2377 275 décrit un obturateur à cristaux liquide à commutation rapide.

**EXPOSÉ DE L'INVENTION**

C'est par conséquent un but de la présente invention d'offrir un système d'imagerie permettant d'imager des microsystèmes enterrés à mouvement rapide.

Le but de la présente invention est atteint par un système comportant une source de rayons X, un écran scintillateur pour convertir les rayons X en rayonnement visible, un détecteur et un obturateur fixes disposés entre l'écran scintillateur et le détecteur, l'obturateur étant apte à passer d'un état passant à un état non passant avec une fréquence supérieure au kHz et une unité de commande de l'obturateur.

L'obturateur peut être formé par une galette de microcanaux, qui offre en plus d'une fréquence de commutation très élevée, l'avantage d'amplifier le signal transmis par le microsystème. On peut atteindre des temps d'exposition entre 10 ns et 100 ns.

En variante, l'obturateur peut être formé par un miroir à cristaux liquide polarisé. On peut atteindre des temps d'exposition de 1 ms.

Ce système permet une détection stroboscopique dans le cas de microsystèmes à mouvement périodique.

Ce système permet également d'obtenir une radiographie du microsystème à un instant donné en synchronisant le mouvement du microsystème et l'état de l'obturateur.

Grâce au système selon la présente invention, il est également possible d'obtenir une observation 4D (3 dimensions de l'espace et 1 dimension temporelle) du microsystème en mettant en oeuvre une observation par tomographie.

La présente invention a alors pour objet un système d'imagerie destiné à l'imagerie d'objets présentant un mouvement rapide, comportant une source de rayons X , un écran scintillateur, un obturateur et un détecteur du faisceau émis par l'obturateur, une unité de traitement reliée au détecteur, l'obturateur étant disposé entre l'écran scintillateur et le détecteur, et un support pour l'objet à observer disposé en aval de la source de rayon X et en amont de l'écran scintillateur, l'obturateur étant un obturateur pilotable à des fréquences élevées, par exemple supérieures à environ 1 kHz, l'obturateur étant fixe et la transmission du signal provenant de l'écran scintillateur vers le détecteur étant commandé par des moyens de polarisation électrique contrôlés par une unité de commande, ledit système d'imagerie comportant également des moyens d'actionnement dudit objet de sorte à mettre en mouvement la partie mobile par rapport à la partie fixe.

Dans un exemple de réalisation, l'obturateur comporte au moins une galette de microcanaux. En variante, l'obturateur est formé par deux galettes de microcanaux disposés l'une derrière l'autre.

Une polarisation résiduelle peut être appliquée à l'une des faces d'une galette.

Avantageusement, l'unité de commande contrôle les moyens de polarisation de sorte qu'ils envoient des impulsions de tension à une fréquence comprise entre 1Hz et 20 MHz. La durée d'une impulsion est par exemple comprise entre 10 ns et 100 ns.

Dans un autre exemple de réalisation, l'obturateur comporte au moins un miroir à cristaux liquides orienté par rapport à l'écran scintillateur et par rapport au détecteur de sorte à réfléchir le faisceau provenant de l'écran scintillateur vers le détecteur lorsqu'il est polarisé. L'unité de commande peut contrôler les moyens de polarisation de sorte qu'ils envoient au miroir à cristaux liquides des impulsions de tension à une fréquence inférieure à 1kHz. Par exemple, la durée d'une impulsion est de l'ordre de 1 ms.

Avantageusement, le support est apte à pivoter suivant un pas angulaire donné autour d'un axe perpendiculaire à l'axe d'émission de la source de rayons X. Le pas angulaire peut être variable.

Selon une caractéristique additionnelle, l'unité de commande peut piloter le mouvement du microsystème. L'unité de commande peut comporter des moyens pour mettre en forme des signaux de pilotage de l'objet avec un retard programmable, lesdits signaux mis en forme servant à la commande des moyens de polarisation.

Par exemple, le détecteur est un dispositif à transfert de charge. En variante, le détecteur est un capteur CMOS.

La présente invention a également pour objet un procédé d'imagerie mettant en oeuvre un système d'imagerie selon la présente invention, dans lequel l'objet à un mouvement périodique et le système est utilisé pour réaliser une détection stroboscopique, de manière à obtenir des images à plusieurs états de l'objet.

La présente invention a également pour objet un procédé d'imagerie mettant en oeuvre un système d'imagerie selon la présente invention, dans lequel l'unité de commande contrôle les moyens de polarisation en fonction du signal pilotant le mouvement de l'objet.

L'unité de commande peut former un signal de commande des moyens de polarisation à partir du signal de pilotage de l'objet en introduisant un retard programmable, la durée du retard est modifiée de sorte à imager plusieurs états de l'objet.

L'objet peut être pivoté autour d'un axe perpendiculaire à l'axe d'émission de rayons X de sorte à réaliser des images de l'objet dans différentes positions angulaires. Le pas angulaire peut être variable.

Le procédé d'imagerie peut comportant .

- l'étape de reconstruction mathématique des images en trois dimensions de l'objet à chaque position angulaire.
- l'étape de concaténation des images en trois dimensions.

Par exemple, l'objet imagé par le procédé d'imagerie est un système microélectromécanique ou un système nanoélectromécanique.

## BRÈVE DESCRIPTION DES DESSINS

La présente invention sera mieux comprise à l'aide de la description qui va suivre et des dessins en annexe, sur lesquels :

- la figure 1A est une représentation schématique d'un exemple de réalisation d'un système d'imagerie selon l'invention, l'obturateur étant formé par une galette de microcanaux,
- la figure 1B est une représentation d'une variante de du système de la figure 1, dans laquelle l'obturateur comporte deux galettes de microcanaux,
- la figure 2 est une représentation schématique d'un autre exemple de réalisation d'un système d'imagerie selon l'invention, l'obturateur étant formé par un miroir à cristaux liquide,
- les figures 3A et 3B sont des représentations graphiques respectivement du mouvement périodique d'un microsystème et de la commande de l'obturateur en fonction du temps afin de réaliser une détection stroboscopique,
- les figures 4A et 4B sont des représentations graphiques respectivement du mouvement périodique d'un microsystème et d'une autre commande de l'obturateur en fonction du temps afin de réaliser une détection stroboscopique,
- les figures 5A et 5B sont des représentations graphiques respectivement d'un signal d'excitation d'un microsystème imposé par l'unité de commande et du signal de commande de l'obturateur en fonction du temps, la commande de l'obturateur étant synchronisée avec le mouvement du microsystème,

- la figure 6 est un organigramme des étapes d'un procédé de fonctionnement du système d'imagerie selon l'invention permettant de réaliser de l'imagerie 4D,
- la figure 7 représente schématiquement les étapes d'enregistrement effectuées suite au déroulement des étapes de l'organigramme de la figure 6,
- la figure 8 est une représentation schématique de la rotation imprimée à l'objet à observer dans le cas où celui-ci présente un grand rapport de forme,
- la figure 9 est une représentation schématique de la chaîne de mesure pour réaliser l'imagerie 4D avec le système selon l'invention.

## EXPOSÉ DÉTAILLÉ DE MODES DE RÉALISATION PARTICULIERS

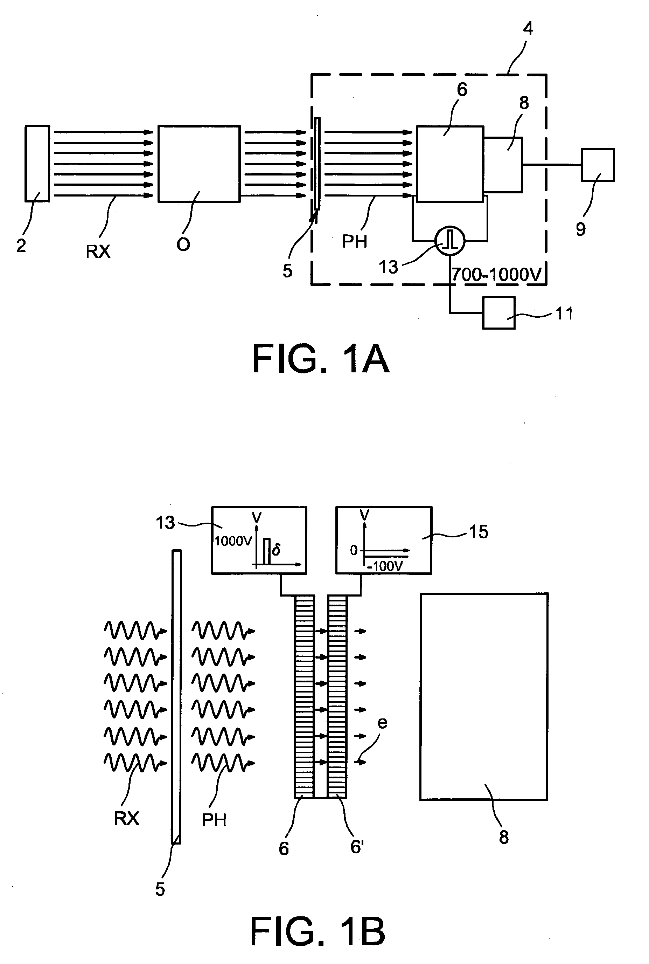

Sur la figure 1A, on peut voir une représentation schématique un d'un système d'imagerie selon la présente invention comportant une source 2 de rayons X destinée à être disposée en amont de l'objet O à illuminer, un ensemble 4 de collecte des rayons X, désignés RC sur les figures, transmis par l'objet O.

Dans la description qui va suivre, les images obtenues par le système selon l'invention seront désignées "radiographie", et sur les dessins seront désignées par "R".

L'ensemble 4 comporte un écran scintillateur 5 convertissant les rayons X en lumière visible, un obturateur 6 et une optique 8 de collecte et d'enregistrement numérique de la lumière visible transmise par l'objet et l'obturateur et une électronique rapide ou unité de commande 11 pour commander l'obturateur 6. L'unité de commande 11 contrôle également l'actionnement du microsystème. L'actionnement du microsystème peut être thermique, électrostatique ou magnétique.

De manière très avantageuse, les microsystèmes sont alimentés sans fil et sans contact par une alimentation externe ce qui permet d'éliminer les mouvements incontrôlés des microsystèmes dus à des fils tournants, qui intervient dans le mode tomographique.

Par exemple, le microsystème est alimenté en puissance par des ondes RF. De tels moyens d'actionnement pour actionner un capteur de contrainte MEMS sont par exemple décrits dans le document Wen H. Ko, Trends and Frontier of MEMS ", in Sensors and Actuators A 136(2007) 62-67; les signaux émis par le capteur sont également lus avantageusement sans fil.

L'optique de détection est par exemple formée par un capteur de type dispositif à transfert de charge ou capteur CCD: ("Charge-Coupled Device" en terminologie anglo-saxonne",) muni d'un scintillateur qui convertit les électrons en rayonnement visible. En variante, on pourrait utiliser un détecteur d'électron à conversion direct. Ces capteurs sont bien connu de l'homme du métier et sont par exemple décrits dans le document US 7 888 781.

En variante encore, on pourrait utiliser des capteurs CMOS qui présentent un temps de lecture plus court que les capteurs CCD, cependant ils ont une moins bonne dynamique. L'optique de détection est reliée à unité de traitement 9 à qui les images sont envoyées.

Dans l'exemple représenté et de manière avantageuse, l'obturateur 6 est formé par une galette de microcanaux ("Microchannel Plate" (MCP) en terminologie anglo-saxonne). Une MCP est une galette en silicium percée d'un grand nombre de microcanaux, dont la taille typique est de 10 $\mu$m. Cette galette est mise sous une tension de plusieurs centaines de volts, de manière à ce que toute particule incidente dans un microcanal et qui heurte la paroi crée une gerbe d'électrons qui sont eux-mêmes accélérés et canalisés le long du microcanal. Une MCP permet donc d'amplifier les charges. L'article Charles P. Beetz, Robert Boerstler, John Steinbeck, Bryan Lemieux" David R. Winn "Silicon-micromachined microchannel plates"; Nuclear Instruments and Methods in Physics Research A 442 (2000) 443} 451 décrit de telles galettes. La mise en oeuvre d'une ou plusieurs galettes de microcanaux est particulièrement adaptée à l'observation de microsystèmes, puisque les canaux ont un diamètre de l'ordre de 10 $\mu$m, dimension qui est cohérente avec la résolution d'observation des systèmes MEMS et NEMS.

Lorsque la galette est polarisée, elle convertit les photons visibles (symbolisés par des flèches et désignés PH) et UV provenant de l'écran scintillateur en électrons (symbolisés par des flèches et désignés e sur la figure 1B) et amplifie le courant électronique envoyé dans le capteur CCD. En l'absence de polarisation, la galette est opaque à ces mêmes rayonnements.

Le système d'imagerie comporte un générateur de tension 13 pour polariser l'obturateur. Les impulsions en tension étant de l'ordre de 700 V à 1000 V.

Par exemple, l'unité de commande polarise la galette 6 par une tension comprise entre 700 V et 1100 V pendant des temps très courts $\delta$ de l'ordre de 10 ns à 100 ns, $\delta$ étant le temps d'exposition, contrôlant le temps d'acquisition de l'image.

Une polarisation résiduelle de l'ordre de 100V peut être appliquée sur l'une des faces de la galette pour éliminer les charges créées par le rayonnement optique dans la galette lors des phases d'obturation.

Cette acquisition d'image peut se faire à un rythme très lent, par exemple à une fréquence de l'ordre de 1 Hz, jusqu'à des fréquences rapides de lors de 2 - 20 MHz, ce qui correspond à f~1/2$\delta$. Outre son fonctionnement sur une gamme de fréquence très étendue, la galette de microcanaux présente l'avantage d'amplifier le courant électronique envoyé au capteur.

Comme nous le verrons par la suite, cette fréquence d'acquisition n'est pas nécessairement régulière et peut être commandée par un générateur extérieur. En particulier, on peut choisir comme commande la fréquence qui pilote l'oscillation du microsystème, en lui appliquant un retard réglable.

Sur la figure 1B, on peut voir représenté une variante du système de la figure 1A, dans laquelle l'obturateur est formé de deux galettes de microcanaux en série, chacune amplifiant le signal d'entrée, ce qui permet d'améliorer le gain. La galette amont est polarisée par le générateur d'impulsion 13 et une polarisation résiduelle est appliquée à la galette aval par des moyens 15. Les deux galettes forment un seul et même obturateur.

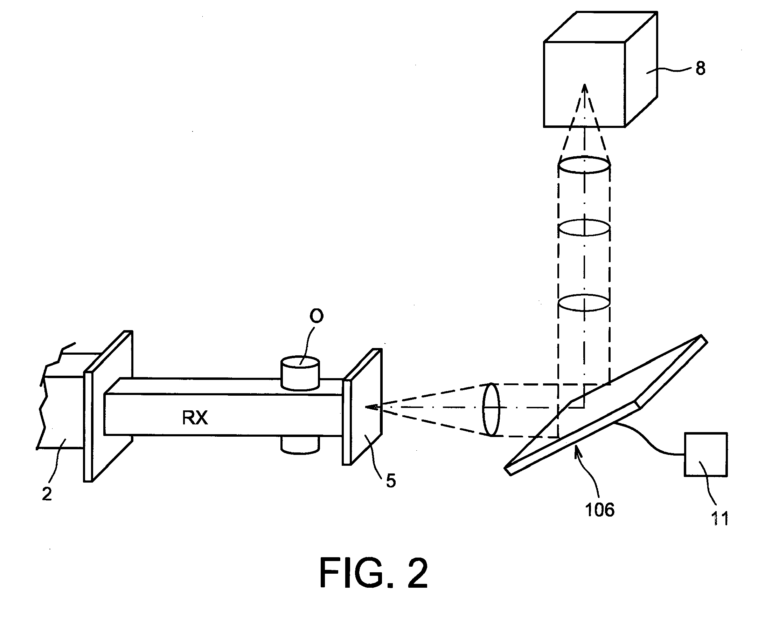

Sur la figure 2, on peut voir un autre exemple de système d'imagerie dans lequel l'obturateur 106 est formé par un miroir à cristaux liquides polarisé. En fonction de la polarisation, l'image visible envoyée par l'écran scintillateur est réfléchie ou non par le miroir vers le capteur CCD. Le temps d'exposition minimal peut être de l'ordre de 1 ms. Dans ce cas, le CCD reçoit directement des photons, et non des électrons. Dans le cas d'un miroir, il s'agit d'un capteur CCD de type classique avec une région photoactive qui convertit les photons visibles en électrons, ensuite les charges crées sont lues et l'image est ainsi formée. Ce capteur est bien connu de l'homme du métier et est par exemple décrit dans le document US 4 996 413.

Ce système d'imagerie est donc particulièrement intéressant dans le cas de microsystèmes à mouvement lent.

Nous allons maintenant décrire la mise en oeuvre du système d'imagerie selon l'invention pour réaliser une détection stroboscopique. Cette détection s'applique aux microsystèmes ayant un mouvement périodique.

Les temps de lecture des capteurs CCD sont très longs. Ainsi, afin d'imager de manière dynamique l'évolution de microsystèmes ayant un mouvement périodiques, on utilise la stroboscopie. Pour cela, on commande en tension l'obturateur de sorte à acquérir une radiographie à différents états du microsystème. Le temps entre deux impulsions est au moins égal au temps de lecture et d'enregistrement du capteur CCD.

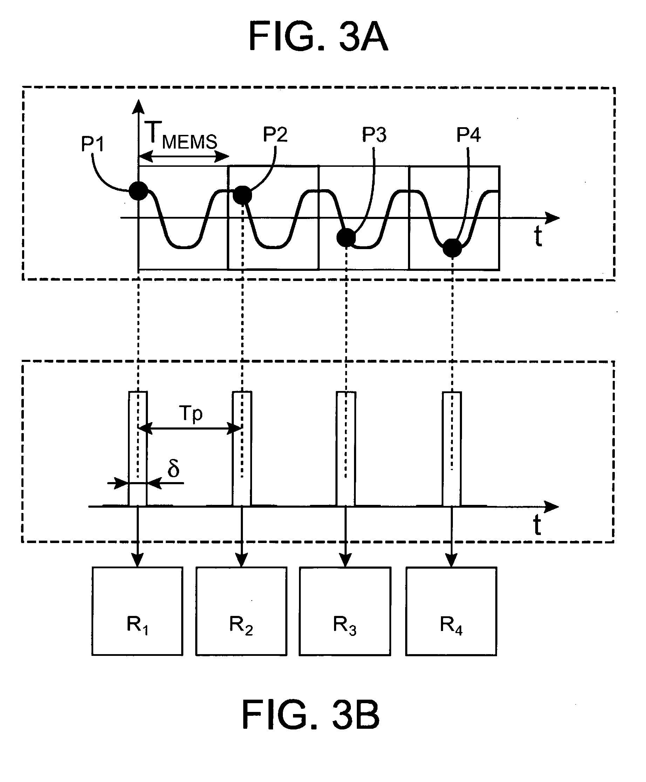

Sur la figure 3A, on peut voir représenté graphiquement la position d'un microsystème que l'on souhaite observer en fonction du temps. Les points P1 à P4 correspondent aux instants du mouvement au cours d'une période que l'on désire observer. R1 à R4 correspondent aux radiographies prises à ces instants P1 à P4.

Sur la figure 3B, sont représentées les impulsions en tension de l'obturateur envoyées par l'électronique. Chaque impulsion correspond à un instant P1 à P4 du mouvement et la durée de l'impulsion représente la résolution temporelle des images.

La lecture et l'enregistrement du capteur ont lieu entre deux impulsions.

Puisque le mouvement est périodique, on peut, en enregistrant des images sur plusieurs périodes, obtenir un film du mouvement périodique du microsystème.

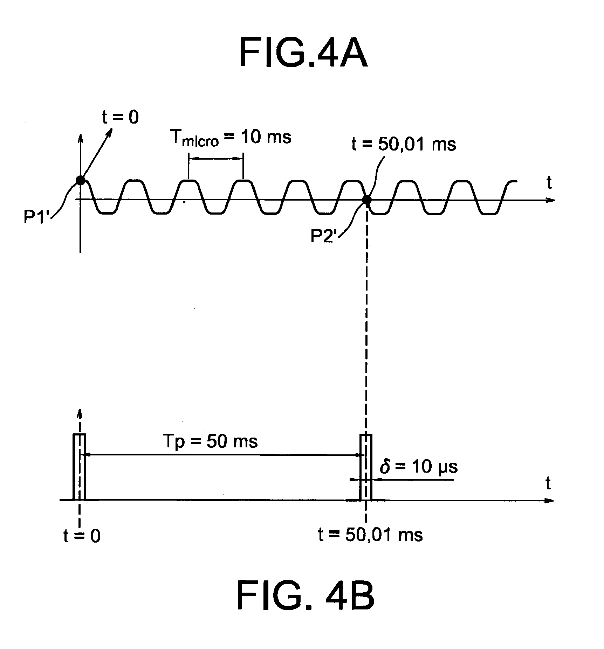

Les figures 4A et 4B représentent le processus d'enregistrement séquentiel des radiographies en mode stroboscopie dans les conditions suivantes :

- Temps d'exposition du microsystème aux rayons X: $\delta = 10\,\mu s$. Ce temps détermine la résolution temporelle et correspond à la durée de l'impulsion appliquée à l'obturateur.
- Période du mouvement du microsystème : Tmicro = 10ms,
- Temps de lecture et d'enregistrement du capteur CCD : $t_{lecture}$ = 50ms.

La période $T_p$ des impulsions appliquées à l'obturateur est :

$$\mathtt{T_p \geq T_{micro} + \delta,\ soit\ T_p \geq 50,01\ s.}$$

On obtient donc deux radiographies du microsystème, l'une à t = 0 s et l'autre à t = 50 ms + 10 $\mu$s 50,01 ms. Dans la mesure où le mouvement du microsystème est périodique de période 10 ms, la radiographie à t = 50,01 ms est équivalente à une radiographie à 0,01 ms = 10 $\mu$s.

Dans cet exemple particulier, la méthode d'acquisition permet donc d'échantillonner le mouvement du microsystème toutes les 10 $\mu$s.

Nous allons maintenant décrire une méthode de détection du mouvement d'un microsystème, celui-ci ayant un mouvement périodique ou non.

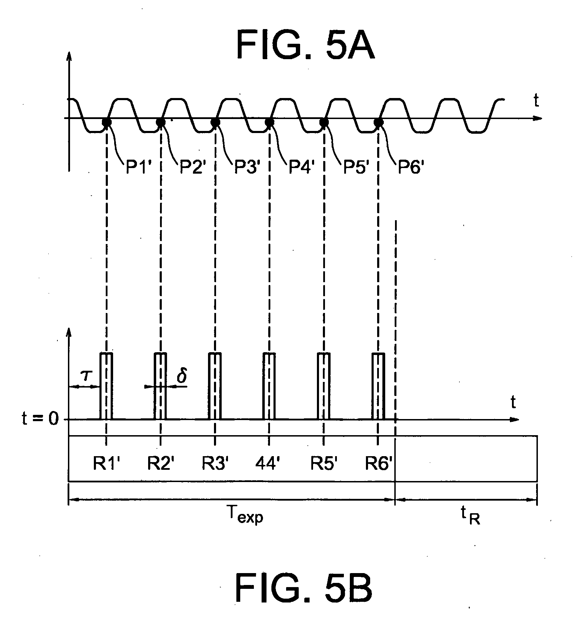

Sur la figure 5A, on peut voir un graphique représentant le signal d'excitation appliqué au microsystème en fonction du temps. Le points P1' à P6' représente les instants que l'on souhaite observer. R1' à R6' correspondent aux radiographies prises à ces instants P1' à P6'.

Cette méthode relie le signal d'excitation du microsystème et l'obturateur. Pour cela, le signal qui pilote le microsystème est utilisé pour commander l'obturateur. L'unité de commande émet le signal pilotant le microsystème et met en forme ce signal en introduisant un retard programmable $\tau$ qui permet de fixer l'instant et donc l'état du microsystème que l'on souhaite observer. On détermine la durée $\delta$ pendant laquelle l'obturateur illumine le capteur CCD. Le signal ainsi transformé est envoyé au générateur de tension.

Sur la figure 5B, on peut voir représenté le signal de commande, sous forme d'impulsions en tension, de l'obturateur formé sur la base du signal de pilotage du microsystème, le retard $\tau$ entre le début du signal d'excitation du système et le point P1' à détecter et la durée $\delta$ d'illumination du capteur CCD.

Cette configuration permet d'acquérir une radiographie du microsystème à un état déterminé.

Le choix du décalage temporel $\tau$ appliqué entre le mouvement du microsystème et l'acquisition de la radiographie permet d'observer l'objet dans différents états lors de son mouvement.

Afin d'observer différents états du microsystème, le retard $\tau$ est modifié.

Le temps entre 2 impulsions peut alors être beaucoup plus court que le temps de lecture et d'enregistrement $t_R$ du capteur CCD. Le choix du temps de mise sous tension $\delta$ de l'obturateur permet de régler la résolution temporelle des images.

Sur la figure 5A, on représente la répétition de l'illumination aux instants P2' à P6' de sorte à observer les instants P2' à P6' lors desquels le microsystème est dans le même état qu'à l'instant P1'. Cela revient donc à prendre six images du microsystème dans le même état. Le capteur CCD est alors exposé pendant une durée totale correspondant au nombre d'impulsions de l'obturateur pendant le temps d'exposition $T_{exp}$ du capteur CCD, c'est-à-dire 6x$\delta$ dans l'exemple de la figure 4B. Les 6 images sont sommées, ce qui permet donc d'améliorer la qualité des images en améliorant le rapport signal sur bruit. Cette méthode s'applique aux mouvements périodiques ou répétables, un mouvement est dit répétable lorsqu'il se reproduit à l'identique mais par nécessairement de manière périodique. Par exemple, dans e cas représenté, on peut considérer que le mouvement se répète huit fois successivement de manière identique.

Grâce à l'invention, on peut donc obtenir des images R1' à R6' en deux dimensions de tous les états du microsystème, on peut donc obtenir un film du mouvement du microsystème enterré. On peut donc observer l'évolution de l'état du microsystème au cours de son fonctionnement et observer par exemple les causes d'endommagement et/ou le phénomène de transfert de masse.

Nous allons maintenant décrire un système et un procédé permettant de reconstruire en 4 dimensions (3 dimensions de l'espace et la dimension temporelle). Pour cela le système est associé à une technique de détection par tomographie, le système comporte alors un support pour l'objet à observer mobile en rotation autour d'un axe et apte à déplacer l'objet selon un angle donné de sorte à modifier le point de vue qu'a le capteur CCD du microsystème.

Les images obtenues à chaque angle de vue sont réalisées par détection stroboscopique ou par synchronisation entre le mouvement du microsystème et le commande de l'obturateur.

Le support est commandé par une unité centrale qui fait pivoter le support lorsque toutes les images d'un point de vue ont été prises.

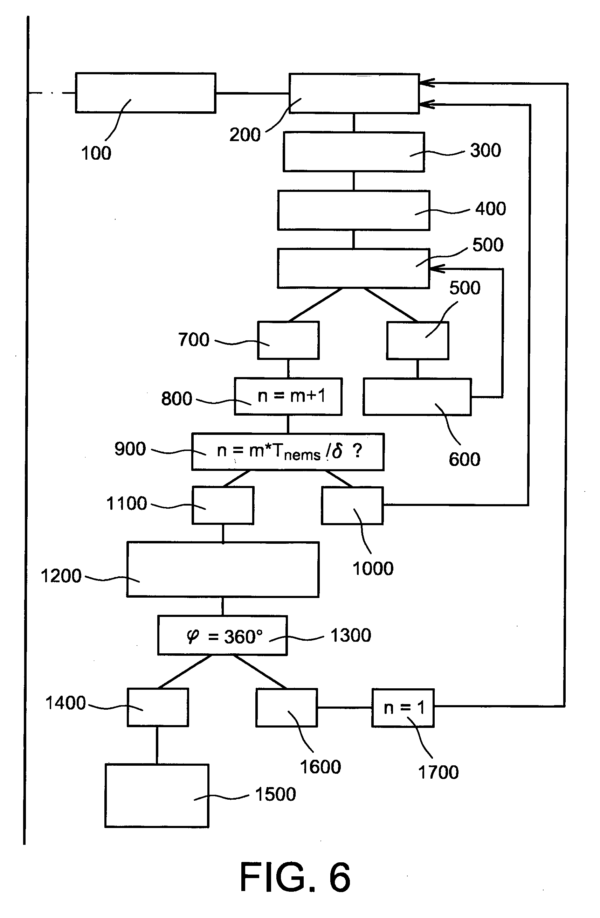

Sur la figure 6, est représenté un organigramme du procédé de reconstruction 4D selon la présente invention.

Le microsystème est positionné sur le support, l'angle de rotation $\varphi$ initial est égal à 0.

n est les nombre d'images par période du microsystème, qui a pour valeur initiale 1.

$T_{micro}$ est la période du microsystème.

$\delta$ est le temps d'exposition.

t est le temps.

En fixant $\delta$, on détermine l'échantillonnage du mouvement du microsystème. En échantillonnant à $\delta$, on souhaite faire $T_{micro}/\delta$ images par période ou un multiple de ce nombre.

Tout d'abord, lors d'une étape 100 ; le microsystème est actionné.

Ensuite, lors d'une étape 200, une impulsion de tension est envoyée à l'obturateur pendant un temps $\delta$.

Lors d'une étape 300, a lieu la lecture par le capteur CDD et l'enregistrement de l'image.

A la fin de cette étape, on vérifie dans une étape 400 si t est congru à n$\delta$ modulo $T_{micro}$ qui s'écrit t = n$\delta$ [$T_{micro}$].

Si la réponse est négative (étape 500), le système attend jusqu'a ce que la condition de l'étape 400 soit vérifiée (étape 600).

Si la réponse est positive (étape 700), n est augmentée de 1 (étape 800).

A l'étape 900, on vérifier si n, i.e. le nombre d'images effectivement réalisées est un multiple du nombre d'images que l'on souhaite acquérir par période, i.e. l'échantillonnage choisi, on vérifie donc si n = m$\times T_{micro}/\delta$, m étant un entier positif.

Si la réponse est négative (étape 1000), on retourne à l'étape 200 pour faire une nouvelle image.

Si la réponse est positive (étape 1100), à l'étape 1200, l'objet est pivoté en faisant tourner le support d'un angle donné. Il peut s'agir d'un angle constant égal à 360°/$N_\varphi$, $N_\varphi$ étant le nombre de points de vue prédéterminé. $\varphi$ peut être variable en fonction de la forme de l'objet comme nous le verrons par la suite.

On vérifie à l'étape 1300 si l'angle dont a fait pivoter l'objet est égal à 360°. Si la réponse est positive (étape 1400), cela signifie que l'objet a fait un tour complet et que toutes les prises de vues ont été réalisées. On va alors à l'étape 1500 correspondant à la fin de l'analyse.

Si la réponse est négative (étape 1600), n reprend la valeur 1 (étape 1700) et le procédé d'analyse reprend à l'étape 200.

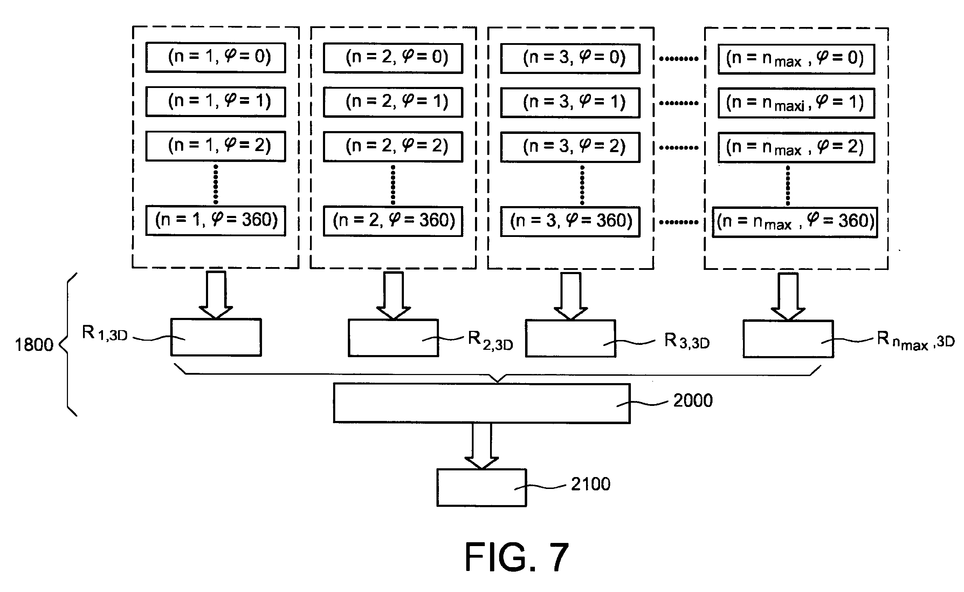

Sur la figure 7, on peut voir schématisée une séquence d'enregistrement des images résultant du procédé de la figure 6 et la reconstruction 4D. La séquence d'enregistrement se fait par lignes

$n_{max}$ est le nombre d'images effectivement prises pour chaque point de vue ou angle de rotation du microsystème; $n_{max}$ est un multiple de $T_{micro}/\delta$.

A partir des $n_{max}$ images prises par angle de rotation, on fait une reconstruction mathématique de chaque état du microsystème aux différents angles de rotation (étape 1800). Sur la base de la représentation de la figure 7, la reconstruction mathématique se fait par colonne. On obtient alors une représentation en 3 dimensions de chaque état du microsystème, chaque état étant séparé de $\delta$. Ces représentations sont désignées $R_{1, 3D}$, $R_{2, 3D}$, $R_{2, 3D}$... $R_{nmax3D}$.

Cette reconstruction mathématique se fait par des techniques connues de l'homme du métier, il peut s'agir de la méthode Filtered Backprojection, de la méthode Algebraic Reconstruction Technique et de toutes leurs variations décrites par exemple dans A.C.Kak, M. Slaney, Principles of Computerized Tomographic Imaging, IEEE Press, 1988. Celles-ci ne seront pas décrites en détail.

Ensuite on effectue une concaténation des volumes en 3D (étape 2000) afin d'obtenir une représentation 4D du microsystème enterré (étape 2100).

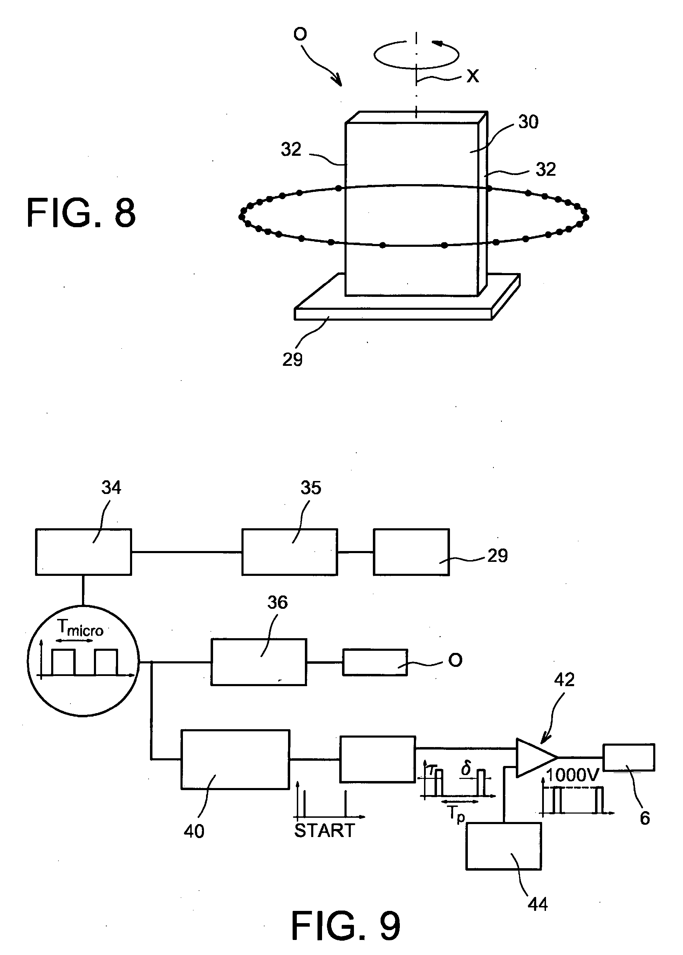

Sur la figure 8, on peut voir une représentation d'un objet avec une schématisation du pas angulaire variable des différentes prises de vue au cours de l'acquisition, i.e. un échantillonnage angulaire irrégulier.

Ceci est particulièrement intéressant dans le cas d'objets à grand rapport de forme, ce qui est en général le cas des microsystèmes. Il est alors préférable lors du mouvement de rotation de prendre des images avec un pas angulaire très fin à certaines orientations, alors que pour d'autres orientations, le pas angulaire pourra avantageusement être choisi plus grand afin de diminuer le temps d'analyse.

Dans l'exemple représenté, l'objet O a une forme de parallélépipède dont l'axe longitudinal X est aligné avec l'axe de rotation du support 29. L'objet présente une épaisseur très faible par rapport à sa longueur et à sa largeur. Il comporte deux faces latérales de grandes dimensions 30, parallèles à l'axe longitudinal, deux faces latérales de petites dimensions 32. Les pas angulaires sont schématisés par des points. Afin de réduire le temps d'analyse, il est intéressant d'avoir un pas angulaire fin lors de l'observation des zones de transition entre les faces 30 et une face 32 pour avoir un grand nombre de prises de vue (grande densité de points) puisque la configuration observée change de manière importante sur une distance angulaire réduite, et un pas angulaire plus grand lorsque l'analyse concerne les faces 30, puisque sur une grande distance angulaire la configuration observée change peu (densité de points plus faible).

Sur la figure 9, on peut voir représenté schématiquement la partie commande et traitement du système pour réaliser une reconstruction 4D dans lequel la polarisation de l'obturateur est synchronisée avec le mouvement du microsystème, comportant un ordinateur 34 formant unité de commande et unité de traitement, qui

- contrôle le positionnement de l'objet en commandant un contrôleur de rotation 35 du support 29,
- contrôle un générateur de signaux 36 qui commande le microsystème
- contrôle l'obturateur. Un discriminateur 40 génère une impulsion désignée START sur la figure 9 sur le front montant (ou descendant) du signal pilotant le microsystème. Cette impulsion START est mise en forme avec un retard $\tau$ et une largeur $\delta$ programmable. Le signal ainsi mis en forme est amplifié par un amplificateur 42 à une haute tension 44 également programmable appliquée directement à l'obturateur. Dans le cas d'une galette de microcanaux Cette haute tension est ajustée de façon à contrôler le gain e la galette de microcanaux.

Le capteur CCD renvoie les images collectées pendant le temps d'ouverture de la galette sur l'ordinateur, qui effectue ensuite la reconstruction 4D.

Avantageusement, il peut être prévu afin d'accélérer davantage l'analyse, de n'utiliser qu'un nombre limité de radiographies, inférieur au nombre théorique, et de compenser ce nombre réduit en utilisant les algorithmes itératifs ART ("Algebraic Reconstruction Technique" en terminologie anglo-saxonne). Par exemple, on utilisera une centaine de projections pour un détecteur de 2000x2000 pixels au lieu des 3000 projections théoriquement nécessaires. Une telle méthode est par exemple décrite dans le brevet US 2008/0205737.

**Revendications**

1. Système d'imagerie d'objets qui comprennent au moins une partie fixe et au moins une partie mobile, lesdites parties fixe et mobile présentant un mouvement relatif rapide, ledit système comportant:

   - une source de rayons X (2),
   - un écran scintillateur (5),

- un obturateur (6, 6', 106) fixe,
- un détecteur (8) du faisceau émis par l'obturateur (6, 6', 106), l'obturateur (6, 6', 106) étant (8) disposé entre l'écran scintillateur (5) et le détecteur,
- une unité de traitement (9) reliée au détecteur (8),
- un support (29) pour l'objet à observer disposé en aval de la source de rayon X (2) et en amont de l'écran scintillateur (5),

**caractérisé en ce que**

- l'obturateur (6, 6', 106) est un obturateur pilotable à des fréquences élevées supérieures à 1 kHz, et la transmission du signal provenant de l'écran scintillateur vers le détecteur est commandée par des moyens de polarisation électrique (13) contrôlés par une unité de commande (11),
- **en ce que** ledit système comporte des moyens d'actionnement dudit objet de sorte à mettre en mouvement la partie mobile par rapport à la partie fixe, et

**en ce que** l'unité de commande contrôle les moyens de polarisation en fonction du signal d'actionnement des moyens d'actionnement de l'objet de sorte à synchroniser l'état de l'obturateur avec l'actionnement de l'objet.

2. Système d'imagerie selon la revendication 1, dans lequel, dans le cas d'objets à mouvements périodiques, l'unité de commande contrôle les moyens de polarisation en foncions de la fréquence desdits mouvements.

3. système d'imagerie selon la revendication 1, dans lequel les moyens d'actionnement sont de type thermique, électrostatique ou magnétique.

4. Système d'imagerie selon l'une des revendications 1 à 3, dans lequel les moyens d'actionnement sont sans contact et sans fil.

5. Système d'imagerie selon l'une des revendications 1 à 4, dans lequel l'obturateur (6, 6') comporte au moins une galette de microcanaux, avantageusement deux galettes (6, 6') de microcanaux disposées l'une derrière l'autre.

6. Système d'imagerie selon la revendication 5, dans lequel une polarisation résiduelle est appliquée à l'une des faces d'une galette (6, 6').

7. Système d'imagerie selon l'une des revendications 5 ou 6, dans lequel l'unité de commande (11) contrôle les moyens de polarisation (13) de sorte qu'ils envoient des impulsions de tension à une fréquence comprise entre 1Hz et 20 MHz et dans lequel la durée d'une impulsion est comprise entre 10 ns et 100 ns.

8. Système d'imagerie selon l'une des revendications 1 à 4, dans lequel l'obturateur (106) comporte au moins un miroir à cristaux liquides orienté par rapport à l'écran scintillateur (5) et par rapport au détecteur (8) de sorte à réfléchir le faisceau provenant de l'écran scintillateur vers le détecteur lorsqu'il est polarisé.

9. Système d'imagerie selon la revendication 8, dans lequel l'unité de commande (11) contrôle les moyens de polarisation (13) de sorte qu'ils envoient au miroir à cristaux liquides des impulsions de tension à une fréquence inférieure à 1kHz et dans lequel la durée d'une impulsion est de l'ordre de 1 ms.

10. Système d'imagerie selon la revendication 1 ou 2, dans lequel le support (29) est apte à pivoter suivant un pas angulaire donné autour d'un axe perpendiculaire à l'axe d'émission de la source de rayons X (2), le pas angulaire pouvant être variable.

11. Système d'imagerie selon l'une des revendications 1 à 10, dans lequel l'unité de commande (11) pilote le mouvement de la partie mobile de l'objet.

12. Système d'imagerie selon la revendication 11, dans lequel l'unité de commande (11) comporte des moyens pour mettre en forme des signaux de pilotage de la partie mobile de l'objet avec un retard programmable, lesdits signaux mis en forme servant à la commande des moyens de polarisation.

13. Procédé d'imagerie mettant en oeuvre un système d'imagerie selon l'une des revendications précédentes, dans lequel la partie mobile de l'objet à un mouvement périodique et le système est utilisé pour réaliser une détection

# EP 2 551 720 B1

stroboscopique, de manière à obtenir des images à plusieurs états de l'objet.

14. Procédé d'imagerie mettant en oeuvre un système d'imagerie selon l'une des revendications 1 à 12, dans lequel l'unité de commande contrôle les moyens de polarisation en fonction du signal pilotant le mouvement de la partie mobile de l'objet.

15. Procédé d'imagerie selon la revendication 14, dans lequel l'unité de commande forme un signal de commande des moyens de polarisation à partir du signal de pilotage de la partie mobile de l'objet en introduisant un retard programmable, la durée du retard est modifiée de sorte à imager plusieurs états de l'objet.

16. Procédé d'imagerie selon l'une des revendications 13 à 15, dans lequel l'objet est pivoté autour d'un axe perpendiculaire à l'axe d'émission de rayons X de sorte à réaliser des images de l'objet dans différentes positions angulaires, le pas angulaire pouvant être variable.

17. Procédé d'imagerie selon la revendication 15 ou 16, comportant :

- l'étape de reconstruction mathématique des images en trois dimensions de l'objet à chaque position angulaire.
- l'étape de concaténation des images en trois dimensions.

18. Procédé d'imagerie selon l'une des revendications 13 à 17, dans lequel l'objet est un système microélectromécanique ou un système nanoélectromécanique.

**Patentansprüche**

1. System zur Bildgebung von Objekten, die wenigstens ein festes Teil und wenigstens ein bewegliches Teil umfassen, wobei das feste und das bewegliche Teil eine schnelle Relativbewegung aufweisen, wobei das System umfasst:

- eine Röntgenstrahlungsquelle (2),
- einen Scintillatorschirm (5),
- einen festen Verschluss (6, 6', 106),
- einen Detektor (8) für den vom Verschluss (6, 6', 106) emittierten Strahl, wobei der Verschluss (6, 6', 106) zwischen dem Scintillatorschirm (5) und dem Detektor (8) angeordnet ist,
- eine Verarbeitungseinheit (9), die mit dem Detektor (8) verbunden ist,
- einen Träger (29) für das zu beobachtende Objekt, angeordnet stromabwärts der Röntgenstrahlungsquelle (2) und stromaufwärts des Scintillatorschirms (5),

**dadurch gekennzeichnet, dass**

- der Verschluss (6, 6', 106) ein mit hohen Frequenzen oberhalb von 1 kHz steuerbarer Verschluss ist, und die Übertragung des vom Scintillatorschirm stammenden Signals zum Detektor durch elektrische Polarisationsmittel (13) gesteuert wird, die von einer Steuereinheit (11) gesteuert werden,
- dass das System Mittel zur Betätigung des Objekts derart umfasst, dass das bewegliche Teil relativ zum festen Teil in Bewegung versetzt wird, und

dass die Steuereinheit die Polarisationsmittel als Funktion des Betätigungssignals der Mittel zur Betätigung des Objekts derart steuert, dass der Zustand des Verschlusses mit der Betätigung des Objekts synchronisiert wird.

2. Bildgebungssystem nach Anspruch 1, bei dem im Fall von Objekten mit periodischen Bewegungen die Steuereinheit die Polarisationsmittel als Funktion der Frequenz der Bewegungen steuert.

3. Bildgebungssystem nach Anspruch 1, bei dem die Betätigungsmittel vom thermischen, elektrostatischen oder magnetischen Typ sind.

4. Bildgebungssystem nach einem der Ansprüche 1 bis 3, bei dem die Betätigungsmittel kontaktfrei und drahtlos sind.

5. Bildgebungssystem nach einem der Ansprüche 1 bis 4, bei dem der Verschluss (6, 6') wenigstens eine Mikrokanalplatte umfasst, vorzugsweise zwei Mikrokanalplatten (6, 6'), die hintereinander angeordnet sind.

6. Bildgebungssystem nach Anspruch 5, bei dem eine Restpolarisation an eine der Seiten einer Platte (6, 6') angelegt wird.

7. Bildgebungssystem nach einem der Ansprüche 5 oder 6, bei dem die Steuereinheit (11) die Polarisationsmittel (13) derart steuert, dass sie Spannungspulse mit einer Frequenz aussenden, die zwischen 1 Hz und 20 MHz enthalten ist, und wobei die Dauer eines Pulses zwischen 10 ns und 100 ns enthalten ist.

8. Bildgebungssystem nach einem der Ansprüche 1 bis 4, bei dem der Verschluss (106) wenigstens einen Flüssigkristallspiegel umfasst, der relativ zum Scintillatorschirm (5) und relativ zum Detektor (8) derart orientiert ist, dass der vom Scintillatorschirm stammende Strahl zum Detektor reflektiert wird, wenn er polarisiert ist.

9. Bildgebungssystem nach Anspruch 8, bei dem die Steuereinheit (11) die Polarisationsmittel (13) derart steuert, dass sie zum Flüssigkristallspiegel Spannungspulse mit einer Frequenz von weniger als 1 kHz aussenden, und wobei die Dauer eines Pulses in der Größenordnung von 1 ms ist.

10. Bildgebungssystem nach Anspruch 1 oder 2, bei dem der Träger (29) dazu ausgelegt ist, sich mit einem vorgegebenen Winkelschritt um eine Achse orthogonal zur Emissionachse der Röntgenstrahlungsquelle (2) zu drehen, wobei der Winkelschritt variabel sein kann.

11. Bildgebungssystem nach einem der Ansprüche 1 bis 10, bei dem die Steuereinheit (11) die Bewegung des beweglichen Teils des Objekts steuert.

12. Bildgebungssystem nach Anspruch 11, bei dem die Steuereinheit (11) Mittel umfasst zur Formung von Signalen zur Steuerung des beweglichen Teils des Objekts mit einer programmierbaren Verzögerung, wobei die geformten Signale zur Steuerung der Polarisationsmittel dienen.

13. Bildgebungsverfahren unter Verwendung eines Bildgebungssystems nach einem der vorhergehenden Ansprüche, bei dem das bewegliche Teil des Objekts eine periodische Bewegung hat, und das System zur Realisierung einer stroboskopischen Erfassung derart verwendet wird, dass Bilder in verschiedenen Zuständen des Objekts erhalten werden.

14. Bildgebungsverfahren unter Verwendung eines Bildgebungssystems nach einem der Ansprüche 1 bis 12, bei dem die Steuereinheit die Polarisationsmittel als Funktion des Signals steuert, welches die Bewegung des beweglichen Teils des Objekts steuert.

15. Bildgebungsverfahren nach Anspruch 14, bei dem die Steuereinheit ein Signal zur Steuerung der Polarisationsmittel ausgehend vom Signal zur Steuerung des beweglichen Teils des Objekts formt, wobei es eine programmierbare Verzögerung einführt, wobei die Dauer der Verzögerung derart modifiziert wird, dass mehrere Zustände des Objekts abgebildet werden.

16. Bildgebungsverfahren nach einem der Ansprüche 13 bis 15, bei dem das Objekt um eine Achse orthogonal zur Emissionsachse der Röntgenstrahlen derart gedreht wird, dass Bilder des Objekts in verschiedenen Winkelpositionen realisiert werden, wobei der Winkelschritt variabel sein kann.

17. Bildgebungsverfahren nach Anspruch 15 oder 16, umfassend:

   - den Schritt der mathematischen Rekonstruktion der Bilder des Objekts in drei Dimensionen bei jeder Winkelposition,
   - den Schritt der Verknüpfung der Bilder in drei Dimensionen.

18. Bildgebungsverfahren nach einem der Ansprüche 13 bis 17, bei dem das Objekt ein mikroelektromechanisches System oder ein nanoelektromechanisches System ist.

**Claims**

1. A system for imaging objects which comprise at least one fixed portion and at least one moving portion, where the fixed and moving portions move relatively rapidly, and where the system comprises:

- an X-ray source (2),
- a scintillator screen (5),
- a fixed shutter (6, 6', 106),
- a detector (8) of the beam emitted by the shutter (6, 6', 106), the shutter (6, 6', 106) being (8) positioned between the scintillator screen (5) and the detector,
- a processing unit (9) connected to the detector (8),
- a support (29) for the object to be observed positioned downstream from the X-ray source (2) and upstream from the scintillator screen (5),

**characterized in that**

- the shutter (6, 6', 106) is a shutter which can be controlled at high frequencies higher than 1 kHz, and the transmission of the signal originating from the scintillator screen towards the detector is controlled by electrical polarisation means (13) controlled by a control unit (11),

**in that** the system comprises means for actuating said object, so as to cause the moving portion to move relative to the fixed portion, and
**in that** the control unit controls the polarisation means according to the actuation signal of the means for actuating the object in order to synchronize the state of the shutter with the actuation of the object.

2. An imaging system according to claim 1, in which, in the case of objects with periodic movements, the control unit controls the polarisation means according to the frequency of the said movements.

3. An imaging system according to claim 1, in which the actuation means are of the thermal, electrostatic or magnetic type.

4. An imaging system according to one of claims 1 to 3, in which the actuation means are contact-free and wireless.

5. An imaging system according to one of claims 1 to 4, in which the shutter (6, 6') comprises at least one microchannel plate, advantageously two microchannel plates (6, 6') positioned one behind the other.

6. An imaging system according to claim 5, in which a residual polarisation is applied to one of the faces of a plate (6, 6').

7. An imaging system according to claim 5 or 6, in which the control unit (11) controls the polarisation means (13) such that they send voltage pulses at a frequency of between 1Hz and 20 MHz and in which the duration of a pulse is between 10 ns and 100 ns.

8. An imaging system according to claim 1 to 4, in which the shutter (106) comprises at least one liquid crystal mirror aligned relative to the scintillator screen (5) and relative to the detector (8), such that it reflects the beam originating from the scintillator screen towards the detector when it is polarised.

9. An imaging system according to claim 8, in which the control unit (11) controls the polarisation means (13) such that they send the liquid crystal mirror voltage pulses at a frequency of less than 1kHz and in which the duration of a pulse is of the order of 1 ms.

10. An imaging system according to claim 1 or 2, in which the support (29) is able to pivot through a given angular pitch around an axis perpendicular to the axis of emission of the X-ray source (2), the angular pitch being able to be variable.

11. An imaging system according to claim 1 to 10, in which the control unit (11) controls the movement of the moving portion of the object.

12. An imaging system according to claim 11, in which the control unit (11) comprises means to shape the signals for controlling the moving portion of the object with a programmable delay, where said shaped signals are used for controlling the polariser.

13. An imaging method using an imaging system according to one of the preceding claims, in which the moving portion of the object has a periodic movement and the system is used to accomplish a stroboscopic detection, so as to obtain images at several states of the object.

14. An imaging method using an imaging system according to one of claims 1 to 12, in which the control unit controls the polarisation means according to the signal controlling the movement of the moving portion of the object.

15. An imaging method according to claim 14, in which the control unit forms a signal for controlling the polarisation means from the signal for controlling the moving portion of the object by introducing a programmable delay; the duration of the delay is modified so as to image several states of the object.

16. An imaging method according to claim 13 to 15, in which the object is pivoted around an axis perpendicular to the X-ray emission axis so as to produce images of the object in different angular positions, the angular pitch being able to be variable.

17. An imaging method according to claim 15 or 16, comprising:

- the step of mathematical reconstruction of the three-dimensional images of the object at each angular position.
- the step of concatenation of the three-dimensional images.

18. An imaging method according to one of claims 13 to 17, in which the object is a microelectromechanical system or a nanoelectromechanical system.

## FIG. 1A

## FIG. 1B

FIG. 2

# FIG. 3A

# FIG. 3B

# FIG.4A

# FIG. 4B

# FIG. 5A

# FIG. 5B

FIG. 6

| $(n = 1, \varphi = 0)$ | $(n = 2, \varphi = 0)$ | $(n = 3, \varphi = 0)$ | ········ | $(n = n_{max}, \varphi = 0)$ |
| $(n = 1, \varphi = 1)$ | $(n = 2, \varphi = 1)$ | $(n = 3, \varphi = 1)$ | ········ | $(n = n_{maxi}, \varphi = 1)$ |
| $(n = 1, \varphi = 2)$ | $(n = 2, \varphi = 2)$ | $(n = 3, \varphi = 2)$ | ········ | $(n = n_{max}, \varphi = 2)$ |
| $(n = 1, \varphi = 360)$ | $(n = 2, \varphi = 360)$ | $(n = 3, \varphi = 360)$ | ········ | $(n = n_{max}, \varphi = 360)$ |

$1800$

$R_{1,3D}$    $R_{2,3D}$    $R_{3,3D}$    $R_{n_{max},3D}$

$2000$

$2100$

FIG. 7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2001046276 A
- GB 2377275 A
- US 7888781 B
- US 4996413 A
- US 20080205737 A

**Littérature non-brevet citée dans la description**

- **WEN H. KO.** Trends and Frontier of MEMS. *Sensors and Actuators A,* 2007, vol. 136, 62-67
- **CHARLES P. BEETZ ; ROBERT BOERSTLER ; JOHN STEINBECK ; BRYAN LEMIEUX ; DAVID R. WINN.** Silicon-micromachined microchannel plates. *Nuclear Instruments and Methods in Physics Research A,* 2000, 442-443, 451
- **A.C.KAK ; M. SLANEY.** Principles of Computerized Tomographic Imaging. IEEE Press, 1988